# EUROPEAN PATENT SPECIFICATION

(11) **EP 4 124 507 B1**
(45) Date of publication and mention of the grant of the patent: **13.03.2024**
(21) Application number: 22187172.6
(22) Date of filing: 27.07.2022
(51) Int. Cl.: B60Q 1/00, B60Q 1/50, B60Q 1/26, B60Q 5/00

(54) **A SIGNALLING SYSTEM**
SIGNALISIERUNGSSYSTEM
SYSTÈME DE SIGNALISATION

(30) Priority: 29.07.2021 IT 202100020333
(43) Date of publication of application: 01.02.2023
(73) Proprietor: Impresa Edile Favaro Roberto, 30170 Trivignano (VE) (IT)
(72) Inventor: FAVARO, Roberto, 30.170 Trivignano (VE) (IT)
(74) Representative: Trentin, Michele

(56) References cited:
- WO-A1-2007/110654
- CA-A1- 2 458 463
- DE-A1-102013 017 626
- DE-A1-102019 004 074
- FR-A1- 2 803 568
- GB-A- 2 531 084
- US-A1- 2019 259 283

## Description

### Definitions

In the present document, vehicle "front space" means the area located in the front thereof, i.e., in its front direction. In particular, such a space must not be understood as limited to the front portion of such a vehicle, but also including the side areas.

### Field of application

The present invention is applicable in the field of the automotive industry and, in particular but not exclusively, to means and vehicles in the construction field.

More in detail, the present invention relates to a signalling system installable on vehicles and operating machines.

### Background art

In the field of road safety and in the workplace (e.g., in a construction site) the importance of providing effective signalling means for vehicles is well known. However, heavy road traffic conditions, especially in urban and extra-urban areas, high vehicle speeds and an increase in the accident rate have highlighted the need for more effective signalling systems with respect to those which are known.

One of the most dangerous circumstances and the cause of many accidents is road crossing by pedestrians. In particular, a dangerous situation which occurs very often has a first vehicle stopped, for example near a zebra crossing, to allow people to cross while a second vehicle, coming from behind and unaware of the presence of people on the road, does not stop but rather passes the first stopped vehicle, putting the crossing pedestrians at risk who, therefore, inevitably risk being hit.

This occurs because the signalling systems present in the prior art do not in any way allow a stopped vehicle to signal the passage of people to a second vehicle arriving from behind.

Moreover, again in the context of pedestrian crossing, the known signalling systems do not in any way allow people on the side of the road to determine with certainty whether vehicles moving at a crossing are in an accelerating or decelerating state when the pedestrians try to cross.

In fact, generally, people on the side of the road look at the driver's eyes to perceive his intentions or have a signal from him indicating the intention to stop, or at least slow down, to allow the crossing. However, if the driver inadvertently presses the accelerator pedal while attempting to brake, despite the alleged "agreement" between the driver and the pedestrian, an accident can occur.

The ability to judge the state of movement of vehicles, both by pedestrians on the road and by vehicles coming from behind, is made even more difficult by darkness and/or the presence of bad weather which make visibility more difficult and, consequently, increase the possibility of the aforesaid problems.

In addition to that, US 2019/259283 A1 is known which describes a technology for detecting an object placed in a blind spot of a vehicle so as to prevent a possible collision. Such technology comprises an imager for detecting the object (e.g., a pedestrian), sensors and a control unit adapted to calculate the collision time between the vehicle and the object. In particular, the control unit can send a collision risk warning signal to a further vehicle and, in an embodiment, such signalling is performed by activating the flashing of the rear direction indicators.

GB 2 531 084 A is also known, which describes a vehicle configured for autonomous driving which comprises sensors for the detection of any pedestrians and a plurality of light sources which are activated to signal the presence thereof to third parties.

Furthermore, WO 2007/110654 A1 is also known, which describes a signalling apparatus which includes means for signalling a warning in response to detecting a hazard, such as the presence of pedestrians.

Further, DE 10 2013 017626 A1 is known which describes a method for warning other vehicles of the presence of pedestrians by means of an optical and/or acoustic signalling means for notifying other road users.

DE 10 2019 004074 A1 is also known, which describes a method for displaying a warning signal. According to the method described, the presence of a person is detected near a parked vehicle and a signalling system is activated to warn a further incoming vehicle. In particular, the signalling system is designed as an emergency flashing system already installed as standard in the vehicle.

Further, FR 2 803 568 A1 is known, which describes a vehicle comprising sensors in the front part and a hazard warning unit which is activated when the presence of a person is detected.

Lastly, CA 2 458 463 A1 is known, which describes a method and an apparatus shaped to warn of the presence of a pedestrian near the rear of a vehicle.

However, all the documents mentioned only allow the vehicle near the pedestrian to signal the presence thereof, thus limiting the warning to vehicles whose position allows the visibility of such a vehicle.

However, it is clear that road safety is not limited to vehicles near the vehicle which performs the signalling, in fact, a further vehicle could arrive, which is not capable of receiving the signalling and, consequently, would put the safety of the pedestrian at risk.

### Presentation of the invention

The object of the present invention is to provide a signalling system which allows to at least partially overcome the drawbacks highlighted above.

In particular, the object of the present invention is to provide a signalling system which allows to improve effectiveness by providing more information with respect to the equivalent devices present in the prior art.

Another object of the present invention is to provide a signalling system which allows to warn incoming vehicles that a pedestrian crossing is occurring.

A further object of the present invention is to provide a signalling system capable of providing roadside pedestrians with information on the state of the vehicle.

In other words, an object of the present invention is to provide a signalling system which increases the information transmitted by a vehicle to the outside, i.e., to pedestrians, cyclists and other vehicles, so as to improve road safety.

Said objects, as well as others which will become clearer below, are achieved by a signalling system installable on a vehicle in accordance with the following claims, which are to be considered an integral part of the present patent.

In particular, the signalling system comprises at least one imaging device, positioned so as to acquire one or more images of at least one vehicle front space, at least one processing and control logic unit and at least a first signalling element.

According to an aspect of the invention, the logic unit is operatively connected to the imaging device and, in turn, the first signalling element is operatively connected to the processing and control logic unit. Furthermore, said first signalling element is positioned so as to be visible behind the vehicle, i.e., it is installed in a vehicle to be recognizable by the vehicles arriving from behind.

According to a further aspect of the invention, the logic unit is capable of commanding the activation of the first signalling element when the aforesaid imaging device acquires one or more images in which at least one person is present therein.

The signalling system of the invention thus advantageously allows to acquire images of the outside of the vehicle on which it is installed to detect the presence of people. Accordingly, the signalling system, by means of the processing and control logic unit, can command the activation of the first signalling element so as to warn, still advantageously, the following vehicles of the presence of people crossing, or about to do so.

On closer inspection, therefore, the signalling system according to the invention allows, still advantageously, to improve the effectiveness of the signalling with respect to the equivalent devices present in the prior art. In fact, it comprises the aforesaid first signalling element which allows to provide information which is not signalled with the systems typically installed in transport means, thus improving road safety.

According to the invention, the processing and control logic unit is capable of controlling the activation of the first signalling element even when the presence of a vehicle in front is detected in the acquired images in which there is a first signalling element which is switched on.

That is, if there is a stopped vehicle having the signalling system of the invention and a second vehicle arrives, also provided with the system of the invention, the signalling system of the second vehicle is advantageously capable of detecting the presence of the first signalling element in the acquired images and, if the latter is active, activating its first signalling element to warn a further arriving vehicle.

### Brief description of the drawings

Further features and advantages of the invention will become more evident in light of the detailed description of a preferred but non-exclusive embodiment of a signalling system according to the invention, illustrated by way of non-limiting example with the aid of the accompanying drawings, in which:

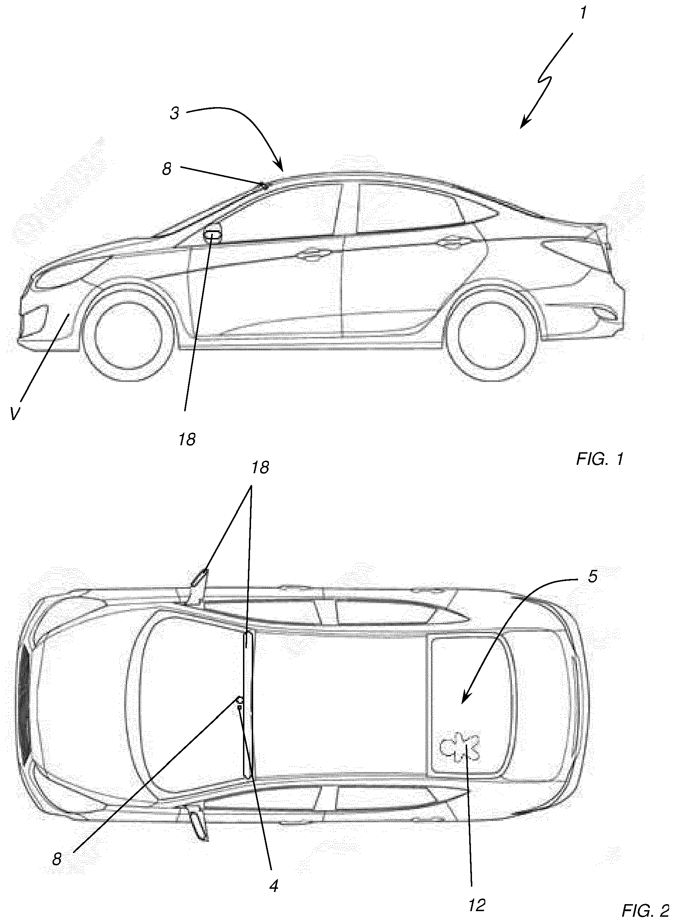

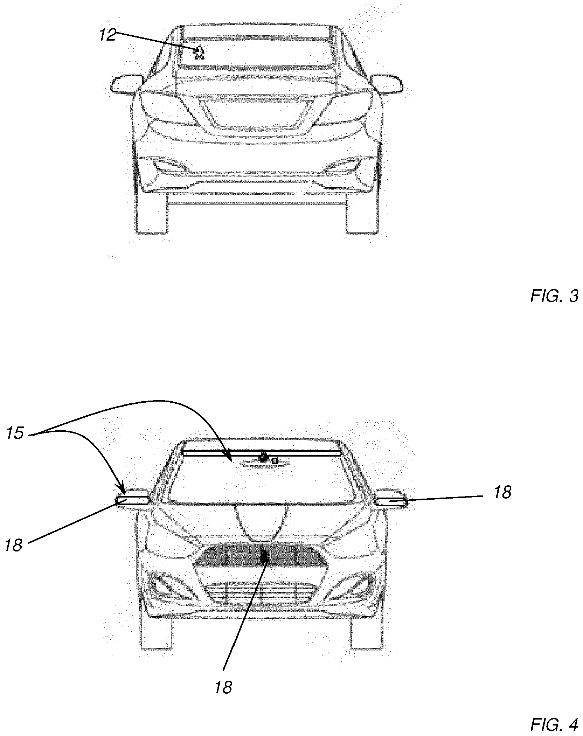

- FIGS. 1 to 4 depict diagrams of the signalling system, installed on a vehicle, according to the invention.

### Detailed disclosure of some preferred exemplary embodiments

With reference to the above-mentioned figures, a signalling system **1** installable in a vehicle **V** is disclosed according to the invention. In particular, it comprises an imaging device **3,** a processing and control logic unit **4** and a first signalling element **5.**

According to an aspect of the invention, the aforesaid imaging device **3,** typically but not necessarily a camera **8,** is positioned so as to acquire images of a front space of the vehicle **V.** Obviously, the number and nature of the devices are not to be considered limiting for different embodiments of the invention where, for example, the system comprises multiple imaging devices or if the imaging device comprises a radar detection assembly.

The signalling system is particularly adapted to be installed on means and vehicles used in the construction field, however, the nature of the vehicle must not be considered limiting for different embodiments of the invention where, for example, the vehicle is a car, a motorcycle, a truck or any other transport means.

According to another aspect of the invention, the processing and control logic unit **4** is operatively connected to the imaging device **3.**

Furthermore, according to the embodiment disclosed, the logic unit **4** uses machine learning algorithms. That is, the processing and control logic unit **4** uses statistical methods to improve its performance in identifying predetermined patterns in the images acquired by the aforesaid imaging device **3.**

In particular, the logic unit **4** of the invention uses machine learning to advantageously improve the ability to detect the presence of people or of the aforesaid first signalling element **5** in the acquired images. Obviously, such an aspect must not be considered limiting for different embodiments of the invention where, for example, the logic unit uses facial or shape recognition algorithms.

As regards the first signalling element **5,** it is operatively connected to the processing and control logic unit **4** and is positioned, on the vehicle **V** in which the signalling system **1** is installed, so as to be visible behind the vehicle **V** itself.

According to the embodiment of the invention which is described, said first signalling element **5** comprises a first light emitter **12** typically, but not necessarily, in the form of a little man.

Advantageously, the first light emitter **12** allows to improve the visibility of the first signalling element **5** to make it recognizable from a greater distance and in the event of adverse visibility conditions such as, for example, in dark situations and/or in the event of weather conditions such as to make visibility more difficult.

Obviously, the nature of the light emitter and, in particular, the intensity, range of colours, frequency, shape, modification of the illuminated surface and hue must not be considered limiting for different embodiments of the invention.

According to a further aspect of the invention, the processing and control logic unit **4** is capable of controlling the activation of the first signalling element **5** when the imaging device **3** acquires one or more images in which the presence of a person is detected.

Advantageously, the signalling system **1** of the invention allows to detect the presence of a person who is crossing and, consequently, warns the arriving vehicles of the presence of pedestrians in the road, by means of the first signalling element **5.**

On closer inspection, therefore, the signalling system **1** allows to improve the effectiveness of the signalling with respect to the equivalent devices present in the prior art. In fact, it allows to provide information, namely that one or more people are crossing the road, thereby improving road safety.

Moreover, still advantageously, the signalling system **1** of the invention is a "stand-alone" system, i.e., the system is independent and can be installed without changing the structure of the vehicle **V.**

According to another aspect of the invention, the processing and control logic unit **4** is capable of controlling the activation of the aforesaid first signalling element **5** even when the presence of a further first signalling element **5** positioned on a front vehicle **V** is detected in the acquired images.

That is, if there are two vehicles **V** provided with the signalling system **1** of the invention, which are in a line to allow pedestrian crossing, the first vehicle **V** activates its first signalling element **5** since the presence of people is detected in the acquired images, similarly, the second vehicle **V** activates its first signalling element **5** because the first active element **5** of the first vehicle **V** is recognized in the acquired images.

Advantageously, this allows to improve road safety since the signalling system **1** of the invention allows to warn more arriving vehicles.

According to an embodiment of the invention, not depicted in the figures, the signalling system further comprises a radio transmitter operatively connected to the logic unit, which is capable of commanding the sending of a signal when the imaging device acquires one or more images in which the presence of a person and/or of the first active signalling element is detected. In particular, such a radio transmitter advantageously allows to send a radio message to the arriving vehicle to signal the presence of pedestrians crossing the road.

In addition, according to the embodiment of the invention which is described, the signalling system **1** further comprises a speed detector of the vehicle **V,** not depicted in the figures, and a second signalling element **15.**

Furthermore, the processing and control logic unit **4** is also operatively connected to the speed detector and is capable of controlling said second signalling element **15** according to the detected speed.

In particular, the second signalling element **15** comprises a second light emitter **18** positioned on the vehicle **V** so that it is visible in front of it. This advantageously allows people on the side of the road to recognize information on the state of the vehicle **V.**

According to the described embodiment of the invention, the second signalling emitter **18** is activated when the vehicle **V** is stopped.

However, according to different embodiments of the invention, such a second light emitter can be activated during braking, during slowing down, have different light intensities or patterns depending on the speed of the vehicle itself.

According to another aspect of the invention, the second signalling element **15** also comprises a beeper **20** which, advantageously, allows to also inform blind people about the state of the vehicle **V.**

On closer inspection, therefore, the second signalling element **15** also allows to provide information to people, or other vehicles, in front of the vehicle **V.** Thereby, the signalling system **1** of the invention allows to further improve road safety by increasing the information provided by the vehicle.

Obviously, also with regard to the second light emitter, its nature and, in particular, the intensity, range of colours, frequency, shape, modification of the illuminated surface and the hue should not be considered limiting for different embodiments of the invention.

In light of the foregoing, it is understood that the signalling system of the invention achieves all the intended objects.

In particular, the signalling system of the invention allows to provide more information, i.e., the presence of pedestrians crossing, with respect to the equivalent devices present in the prior art.

Furthermore, the signalling system allows to warn pedestrians, or other vehicles arriving frontally, of the state of the vehicle.

On closer inspection, therefore, the signalling system of the invention allows to improve road safety.

The invention might be subject to many changes and variants, which are all included in the appended claims. Moreover, all the details and steps may furthermore be replaced by other technically equivalent elements, and the materials may be different depending on needs, without departing from the protection scope of the invention defined by the appended claims.

## Claims

1. A signalling system installable on a vehicle **(V)** comprising:
- at least one imaging device **(3)** to be positioned to acquire one or more images of at least one space in front of the vehicle **(V);**
- at least one processing and control logic unit **(4)** operatively connected to said at least one imaging device **(3);**
- at least one first signalling element **(5)** operatively connected to said at least one processing and control logic unit **(4),** said at least one first signalling element **(5)** to be positioned so as to be visible behind the vehicle **(V),**
said one signalling system being **characterized in that** said at least one processing and control logic unit **(4)** is capable of commanding the activation of at least said at least one first signalling element **(5)** when said at least one imaging device **(3)** acquires one or more images in which at least one person is present and when the presence of a front vehicle in which said signalling system is also installed and its at least one first signalling element **(5)** is switched on is detected in said one or more images acquired by said at least one imaging device **(3).**

2. Signalling system according to claim 1, **characterized in that** said at least one processing and control logic unit **(4)** uses machine learning algorithms.

3. Signalling system according to one or more of the previous claims, **characterized in that** said at least one imaging device **(3)** is a camera **(8).**

4. Signalling system according to one or more of the previous claims, **characterized in that** said at least a first signalling element **(5)** comprises a first light emitter **(12).**

5. Signalling system according to one or more of the previous claims, **characterized in that** it comprises at least one speed detector of the vehicle **(V).**

6. Signalling system according to claim 5, **characterized in that** said at least one processing and control logic unit **(4)** is operatively connected to said at least one speed detector and is capable of controlling at least a second signalling element **(15)** according to the detected speed.

7. Signalling system according to claim 5 or 6, **characterized in that** said at least a second signalling element **(15)** comprises at least a second light emitter **(18)** positioned so as to be visible in front of the vehicle **(V).**

8. Signalling system according to one or more of claims 6 to 8, **characterized in that** said at least one second signalling element **(15)** also comprises at least one beeper **(20).**

## Patentansprüche

1. Signalisierungssystem, welches auf einem Fahrzeug (V) installierbar ist, umfassend:
- mindestens eine Bildgebungsvorrichtung (3), die so zu positionieren ist, dass sie ein oder mehrere Bilder mindestens eines Raumes vor dem Fahrzeug (V) erfasst;
- mindestens eine Verarbeitungs- und Steuerungslogikeinheit (4), die mit der mindestens einen Bildgebungsvorrichtung (3) in Wirkverbindung steht;
- mindestens ein erstes Signalisierungselement (5), das mit der mindestens einen Verarbeitungs- und Steuerungslogikeinheit (4) in Wirkverbindung steht, wobei das mindestens eine erste Signalisierungselement (5) so zu positionieren ist, dass es hinter dem Fahrzeug (V) sichtbar ist,
wobei das Signalisierungssystem **dadurch gekennzeichnet ist, dass** die mindestens eine Verarbeitungs- und Steuerungslogikeinheit (4) in der Lage ist, die Aktivierung wenigstens des mindestens einen ersten Signalisierungselements (5) zu steuern, wenn die mindestens eine Bildgebungsvorrichtung (3) ein oder mehrere Bilder erfasst, in denen mindestens eine Person vorhanden ist, und wenn das Vorhandensein eines vorausfahrenden Fahrzeugs, in welchem das Signalisierungssystem ebenfalls installiert ist und dessen wenigstens ein erstes Signalisierungselement (5) eingeschaltet ist, in den ein oder mehreren Bildern erkannt wird, die von der mindestens einen Bildgebungsvorrichtung (3) erfasst werden.

2. Signalisierungssystem nach Anspruch 1, **dadurch gekennzeichnet, dass** die mindestens eine Verarbeitungs- und Steuerungslogikeinheit (4) Algorithmen des maschinellen Lernens verwendet.

3. Signalisierungssystem nach einem oder mehreren der vorhergehenden Ansprüche, **dadurch gekennzeichnet, dass** die mindestens eine Bildgebungsvorrichtung (3) eine Kamera (8) ist.

4. Signalisierungssystem nach einem oder mehreren der vorhergehenden Ansprüche, **dadurch gekennzeichnet, dass** das mindestens eine erste Signalisierungselement (5) einen ersten Lichtsender (12) umfasst.

5. Signalisierungssystem nach einem oder mehreren der vorhergehenden Ansprüche, **dadurch gekennzeichnet, dass** es mindestens einen Geschwindigkeitsdetektor des Fahrzeugs (V) umfasst.

6. Signalisierungssystem nach Anspruch 5, **dadurch gekennzeichnet, dass** die mindestens eine Verarbeitungs- und Steuerungslogikeinheit (4) mit dem mindestens einen Geschwindigkeitsdetektor in Wirkverbindung steht und in der Lage ist, mindestens ein zweites Signalisierungselement (15) entsprechend der detektierten Geschwindigkeit zu steuern.

7. Signalisierungssystem nach Anspruch 5 oder 6, **dadurch gekennzeichnet, dass** das mindestens eine zweite Signalisierungselement (15) mindestens einen zweiten Lichtsender (18) umfasst, der so positioniert ist, dass er vor dem Fahrzeug (V) sichtbar ist.

8. Signalisierungssystem nach einem oder mehreren der Ansprüche 6 bis 7, **dadurch gekennzeichnet, dass** das mindestens eine zweite Signalisierungselement (15) außerdem mindestens einen Piepser (20) umfasst.

## Revendications

1. Système de signalisation installable sur un véhicule **(V)** comprenant :
- au moins un dispositif de formation d'images **(3)** à positionner pour acquérir une ou plusieurs images d'au moins un espace devant le véhicule **(V)** ;
- au moins une unité logique de traitement et de commande (4) fonctionnellement connectée audit au moins un dispositif de formation d'images **(3)** ;
- au moins un premier élément de signalisation **(5)** fonctionnellement connecté à ladite au moins une unité logique de traitement et de commande **(4),** ledit au moins un premier élément de signalisation **(5)** devant être positionné de manière à être visible derrière le véhicule **(V),** ledit système de signalisation étant **caractérisé en ce que** ladite au moins une unité logique de traitement et de commande (4) est capable de commander l'activation d'au moins ledit au moins un premier élément de signalisation **(5)** lorsque ledit au moins un dispositif de formation d'images **(3)** acquiert une ou plusieurs images dans lesquelles au moins une personne est présente et lorsque la présence d'un véhicule avant dans lequel ledit système de signalisation est également installé et son au moins un premier élément de signalisation **(5)** est allumé, est détectée dans lesdites une ou plusieurs images acquises par ledit au moins un dispositif de formation d'images **(3).**

2. Système de signalisation selon la revendication 1, **caractérisé en ce que** ladite au moins une unité logique de traitement et de commande (4) utilise des algorithmes d'apprentissage automatique.

3. Système de signalisation selon une ou plusieurs des revendications précédentes, **caractérisé en ce que** ledit au moins un dispositif de formation d'images **(3)** est une caméra **(8).**

4. Système de signalisation selon une ou plusieurs des revendications précédentes, **caractérisé en ce que** ledit au moins un premier élément de signalisation **(5)** comprend un premier émetteur de lumière **(12).**

5. Système de signalisation selon une ou plusieurs des revendications précédentes, **caractérisé en ce qu'**il comprend au moins un détecteur de vitesse du véhicule **(V).**

6. Système de signalisation selon la revendication 5, **caractérisé en ce que** ladite au moins une unité logique de traitement et de commande **(4)** est fonctionnellement connectée audit au moins un détecteur de vitesse et est capable de commander au moins un second élément de signalisation (15) selon la vitesse détectée.

7. Système de signalisation selon la revendication 5 ou 6, **caractérisé en ce que** ledit au moins un second élément de signalisation **(15)** comprend au moins un second émetteur de lumière **(18)** positionné de manière à être visible devant le véhicule **(V).**

8. Système de signalisation selon une ou plusieurs des revendications 6 à 8, **caractérisé en ce que** ledit au moins un second élément de signalisation **(15)** comprend également au moins un avertisseur sonore **(20).**
